# FASCICULE DE BREVET EUROPEEN

(11) **EP 2 021 641 B1**
(45) Date de publication et mention de la délivrance du brevet: **09.06.2010**
(21) Numéro de dépôt: 07788939.2
(22) Date de dépôt: 12.04.2007
(51) Int. Cl.: F16C 33/41

(54) **CAGE POUR ROULEMENT A BILLES**
KUGELLAGERKÄFIG
BALL BEARING CAGE

(30) Priorité: 12.05.2006 FR 0604232
(43) Date de publication de la demande: 11.02.2009
(73) Titulaire: Aktiebolaget SKF, 415 50 Göteborg (SE)
(72) Inventeur: DOYER, Armel, Louis, 37510 Savonnieres (FR); BERENS, Frank, 37110 Saunay (FR); ADANE, Thierry, 37100 Tours Nord (FR); BAILLIEUL, Nicolas, 50100 Cherbourg (FR); MANCEAU, Alexandre, 37540 St Cyr Sur Loire (FR)
(74) Mandataire: Dossmann, Gérard
(86) Numéro de dépôt international: PCT/FR2007/051101
(87) Numéro de publication internationale: WO 2007/135305

(56) Documents cités:
- EP-A- 1 070 866
- DE-A1- 3 724 046
- JP-A- 11 210 757
- JP-A- 2002 139 049
- JP-A- 2002 147 463
- JP-A- 2003 329 045
- US-A- 5 015 105

## Description

La présente invention concerne le domaine des cages pour roulement, en particulier les cages en matériau synthétique utilisées dans les roulements à billes à gorge profonde afin d'assurer l'espacement circonférentiel convenable entre les billes. L'invention concerne également les cages pour roulement à bagues en tôle de faible épaisseur.

De tels types de cages présentent une forme générale annulaire avec des alvéoles sphériques dans lesquelles viennent se loger partiellement les billes. Les billes sont retenues dans les alvéoles par des griffes disposées par paires à l'opposé du talon de la cage. Les alvéoles sphériques possèdent un diamètre très légèrement supérieur à celui des billes, afin qu'un certain jeu fonctionnel entre billes et alvéoles existe. On peut se reporter à l'abrégé du document JP 2002/147 463 (NSK), dans lequel l'épaisseur radiale des griffes va en s'amenuisant à l'opposé du talon.

Lorsque le roulement tourne à haute vitesse, sous l'effet de la force centrifuge, la cage est soumise à des contraintes qui tendent à déformer ladite cage, principalement dans le sens radial, et à la mettre en parapluie, c'est-à-dire à donner à la cage une forme conique par augmentation du diamètre du côté des griffes. De telles déformations ont des conséquences nuisibles au bon fonctionnement du roulement. En effet, les bords d'alvéoles viennent serrer contre les billes, provoquant une augmentation du couple de flottement et un effet de raclage du lubrifiant, conduisant rapidement à une dégradation accélérée des conditions de lubrification du roulement. Il existe également un risque d'entrée en contact des extrémités des griffes avec l'alésage de la bague extérieure du roulement, risquant de provoquer une usure excessive de la cage.

La présente invention a pour but de remédier à ces inconvénients.

La présente invention a pour but de diminuer les déformations radiales de l'extrémité de la cage opposée au talon tout en allégeant ladite cage.

La cage pour roulement à billes comprend un talon annulaire et une portion sensiblement axiale pourvue de griffes définissant des alvéoles pour des billes et se raccordant sur le talon. La portion sensiblement axiale s'étend axialement sur une longueur supérieure ou égale à la moitié du diamètre des alvéoles. La portion sensiblement axiale présente un diamètre extérieur inférieur au diamètre extérieur du talon. Le diamètre extérieur de la portion sensiblement axiale est compris entre le diamètre primitif de ia cage diminué de ia moitié de l'épaisseur radiale du talon et le diamètre primitif de la cage augmenté de la moitié de l'épaisseur radiale du talon comme décrit dans le document JP-A-2003-329045 (NSK Ltd.).

On entend par « diamètre primitif de la cage », le diamètre du cercle fictif passant par le centre des sphères fictives définissant les alvéoles. Le diamètre primitif de la cage est sensiblement égal au diamètre primitif du roulement, c'est-à-dire le diamètre du cercle fictif joignant les centres des billes.

On obtient ainsi un allègement de la portion sensiblement axiale de la cage dont l'épaisseur radiale est réduite par rapport à celle du talon, d'où une réduction du coût de la matière première de la cage, de la masse et de l'inertie de la cage. La portion sensiblement axiale ayant une longueur significative, l'allègement est important. Grâce à cet allègement, la cage se déforme moins à haute vitesse, d'où une réduction de l'usure de la cage et des billes.

Dans un mode de réalisation, la portion sensiblement axiale présente au moins sur une partie de sa longueur un angle de dépouille inférieur à 6°, par exemple de l'ordre de 4°. On facilite ainsi le démoulage de la portion sensiblement axiale réalisée en matériau synthétique moulé.

Dans un mode de réalisation, la portion sensiblement axiale s'étend axialement sur une longueur au moins égale à 60% du diamètre des alvéoles. La portion sensiblement axiale peut présenter un diamètre extérieur inférieur ou égal à 95% du diamètre extérieur du talon.

Avantageusement, le diamètre extérieur de la portion sensiblement axiale est compris entre le diamètre primitif de la cage diminué du tiers de l'épaisseur radiale du talon et le diamètre primitif de la cage augmenté du tiers de l'épaisseur radiale du talon.

Dans un mode de réalisation, la cage comprend un raccordement entre le talon et la portion radiale. Le raccordement s'étend axialement sur une longueur inférieure à celle de la portion axiale. On obtient ainsi une rigidité radiale élevée de la portion axiale. Le raccordement peut s'étendre sur une longueur inférieure au tiers de la longueur de la portion axiale. La portion sensiblement axiale et le raccordement peuvent s'étendre axialement sur au moins la moitié du diamètre des alvéoles.

Avantageusement, des ouvertures sont ménagées dans le talon, les ouvertures débouchant sur au moins deux faces du talon. Les ouvertures peuvent être disposées angulairement à équidistance entre deux alvéoles. On obtient ainsi un allégement significatif du talon.

Avantageusement, des zones creuses sont ménagées à partir de la face externe de la portion axiale. Les zones creuses peuvent être disposées angulairement à équidistance entre deux alvéoles. On allège ainsi la portion axiale, d'où un gain de matière et une diminution de la déformation due à la vitesse,

les ouvertures et les zones creuses étant en communication.

Dans un mode de réalisation, la portion sensiblement axiale comprend une pluralité de protubérances inter-alvéolaires. Une protubérance comprend deux branches définissant les alvéoles et se raccordant au talon, une nervure reliant les branches à distance du talon et à distance des extrémités libres des branches, et une cloison disposée entre les branches, la nervure et le talon. La cloison peut présenter une épaisseur radiale inférieure à l'épaisseur radiale des branches.

Dans un mode de réalisation, la cage comprend du polyamide chargé de fibres de verre.

Dans un mode de réalisation, la cage comprend du polyéther-éther-cétone.

L'invention concerne également un palier à roulement comprenant des éléments roulants disposés entre deux pistes de roulement et montés dans les alvéoles d'une cage. La cage comprend un talon annulaire et une portion sensiblement axiale pourvue de griffes définissant lesdites alvéoles et se raccordant sur le talon. La portion sensiblement axiale s'étend axialement sur une partie de la longueur des éléments roulants. La portion sensiblement axiale présente un diamètre extérieur inférieur au diamètre extérieur du talon. Le diamètre extérieur de la portion sensiblement axiale est compris entre le diamètre primitif de la cage diminué de la moitié de l'épaisseur radiale du talon et le diamètre primitif de la cage augmenté de la moitié de l'épaisseur radiale du talon.

On peut conserver en bordure d'alvéole une épaisseur axiale identique à celle de l'intérieur de l'alvéole, formant ainsi une nervure assurant une bonne rigidité. On bénéficie des effets de la réduction de masse de la cage, de l'accroissement de l'espace disponible pour la graisse tout en conservant une rigidité suffisante pour réduire les déformations radiales de la cage. Le gain de masse d'une cage peut être de l'ordre de 20 à 30%, par exemple 25%, tandis que la déformation radiale peut être réduite d'environ 30 à 40%, par exemple 35%. Grâce à la cage, on peut utiliser un roulement à une vitesse de rotation supérieure de 17% à un roulement équipé d'une cage conventionnelle, par exemple 700 000 ndm au lieu de 600 000 ndm, le ndm étant un facteur de vitesse résultant du produit de la vitesse de rotation en t/mn par le diamètre primitif du roulement en mm. Le ndm est représentatif de la vitesse linéaire de déplacement des billes.

La cage permet également, pour une vitesse donnée, une utilisation avec des températures de fonctionnement plus élevées que dans le cas d'une cage conventionnelle, et ce grâce à la réduction de la déformation et à l'accroissement de l'espace disponible pour le lubrifiant. Par exemple, pour une cage en polyamide PA66 chargé de fibres de verre, on peut repousser la limite de température d'utilisation de 120°C à 150°C. En outre, la réduction de la quantité de matière formant la cage a un effet significatif de réduction de coût de matière première.

La présente invention sera mieux comprise à l'étude de la description détaillée de quelques modes de réalisation pris à titre d'exemples nullement limitatifs et illustrés par les dessins annexés, sur lesquels :
- la figure 1 est une vue éclatée en perspective d'un palier à roulement selon un aspect de l'invention ;
- la figure 2 est une vue en perspective de la cage du roulement de la figure 1 ;
- la figure 3 est une vue partielle en coupe axiale au droit d'une alvéole de la cage de la figure 2 ;
- la figure 4 est une vue partielle en coupe axiale au droit d'une portion sensiblement axiale de la cage de la figure 2 ;
- les figures 5 et 6 sont des vues correspondant aux figures 3 et 4 d'un autre mode de réalisation de la cage ;
- les figures 7 et 8 sont des vues correspondant aux figures 3 et 4 d'un autre mode de réalisation de la cage ;
- la figure 9 est une vue correspondant à la figure 3 d'un autre mode de réalisation de la cage ;
- la figure 10 est une vue en perspective de la cage de la figure 9;
- la figure 11 est une vue correspondant à la figure 3 d'un autre mode de réalisation de la cage ;
- la figure 12 est une vue en perspective de ia cage de la figure 11 ; et
- la figure 13 montre une courbe de déformation de la cage en fonction de la distance par rapport au talon pour une cage selon l'invention et une cage conventionnelle à des conditions de fonctionnement données.

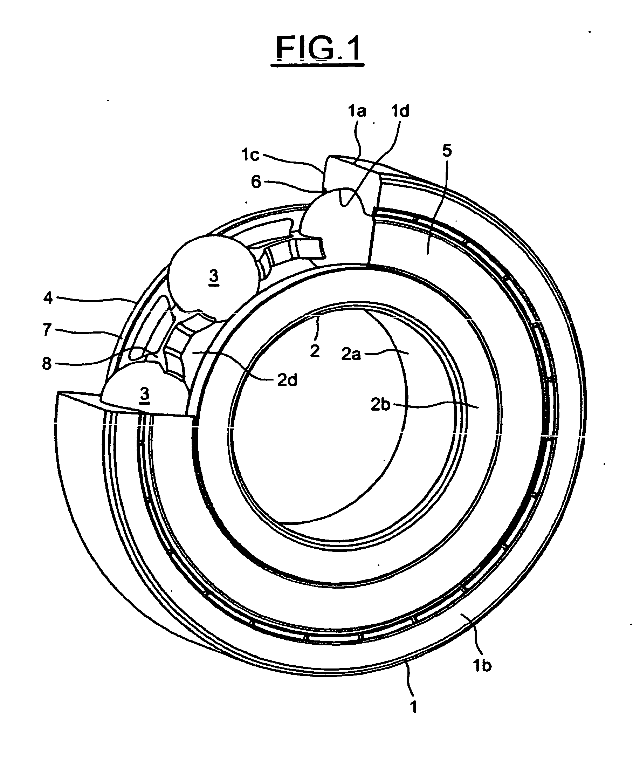

Comme on peut le voir sur la figure 1, le palier à roulement comprend une bague extérieure 1, une bague intérieure 2, une rangée d'éléments roulants 3, ici des billes, une cage 4 de maintien de l'espacement circonférentiel des éléments roulants 3 et des flasques d'étanchéité 5 et 6.

Les bagues extérieure 1 et intérieure 2 sont de type à gorge profonde, par exemple obtenues par usinage d'une portion de tube. La bague extérieure 1 comprend une surface extérieure axiale cylindrique 1a, des surfaces frontales radiales opposées 1b et 1c, et un alésage à partir duquel est formé un chemin de roulement 1d pour les éléments roulants 3. La bague intérieure 2 comprend un alésage cylindrique 2a, deux surfaces frontales radiales opposées 2b et 2c et une surface extérieure à partir de laquelle est formée une piste de roulement 2d pour les éléments roulants 3. La bague extérieure 1 est munie de deux rainures symétriques, dans lesquelles sont emmanchés respectivement les flasques d'étanchéité 5 et 6 du côté de la surface radiale 1b et de la surface radiale 1c. Les flasques d'étanchéité 5 et 6 viennent former un passage étroit avec une portée cylindrique de la bague intérieure 2 située entre la piste de roulement 2d et les surfaces radiales frontales respectives 2b et 2c.

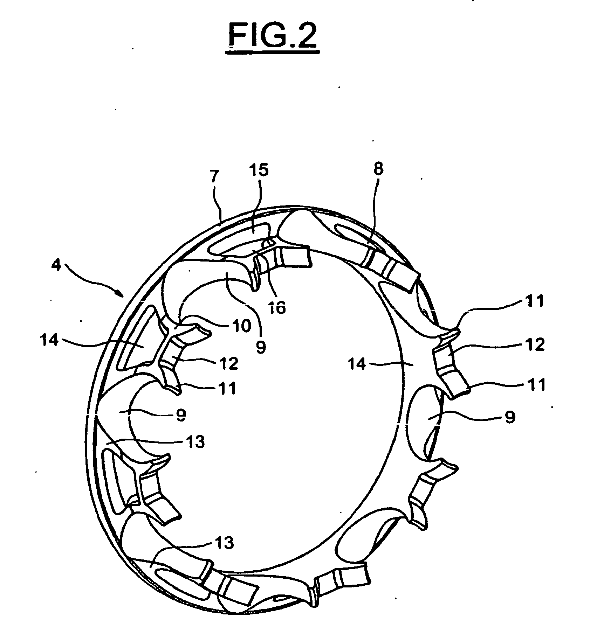

La cage 4 est mieux visible sur la figure 2 et comprend un talon 7 annulaire et une partie axiale 8 définissant une pluralité d'alvéoles pour les éléments roulants 3. Les alvéoles 9 sont de forme sphérique ou quasi-sphérique.

Le talon 7 présente un diamètre extérieur supérieur à celui de la partie axiale 8 et un diamètre intérieur égal. Toutefois, à titre de variante, on pourrait prévoir un talon présentant un diamètre intérieur légèrement différent de celui de la partie axiale 8. La partie axiale 8 présente une longueur axiale au moins égale à la moitié du diamètre des alvéoles 9, de telle sorte que les éléments roulants 3 puissent être convenablement retenus dans lesdites alvéoles 9. Le diamètre extérieur de la portion sensiblement axiale 8 est compris dans la plage définie entre le diamètre primitif de la cage moins la moitié de l'épaisseur radiale du talon et le diamètre primitif de la cage plus la moitié de l'épaisseur radiale du talon. Le diamètre primitif de la cage est le diamètre du cercle fictif passant par le centre des sphères fictives définissant les alvéoles 9.

Entre deux alvéoles 9 voisines, la partie axiale 8 forme une protubérance comprenant deux branches 10 en arc de cercle, chacune se terminant par une griffe 11 axialement à l'opposé du talon 7. La partie axiale 8 comprend également une nervure 12 reliant les extrémités des deux branches 10 à l'opposé du talon 7. Au-delà de la nervure 12, s'étendent les griffes 11. Les branches 10, les griffes 11 et la nervure 12 peuvent présenter une épaisseur radiale égale.

La cage 1 comprend également un raccordement 13 situé à la base de chaque branche 10 et formant interface entre le talon 7 et la branche 10. Le raccordement 13 possède un profil arrondi en section droite et présente une épaisseur radiale décroissante en allant du talon 7 vers la branche 10. Les branches 10 forment des nervures offrant une surface suffisante pour former les alvéoles 9 de retenue des éléments roulants 3.

La partie axiale 8 comprend également une cloison 14 reliant deux branches 10 de deux alvéoles 9 voisines. La cloison 14 présente une faible épaisseur radiale, par exemple inférieure à la moitié de l'épaisseur radiale des branches 10, et s'étend axialement entre le talon 7 et la nervure 12. La cloison 14 est disposée sur la face interne de la partie axiale 8 et laisse subsister sur la face externe une zone creuse 16. En d'autres termes, les zones creuses 16 s'étendent axialement entre le talon 7 et la nervure 12, circonférentiellement entre deux branches 10 de deux alvéoles 9 voisines et radialement entre la cloison 14 et la face externe de la partie axiale 8. Comme on peut le voir sur la figure 2, la cloison 14 est délimitée radialement vers l'intérieur par la surface intérieure cylindrique de la cage 1.

Des ouvertures 15 sont également ménagées dans le talon 7 et s'étendent axialement entre la face du talon 7 opposée à la partie axiale 8 et les zones creuses 16. Les ouvertures 15 et les zones creuses 16 sont donc en communication mutuelle, ce qui facilite la fabrication de la cage, par exemple par moulage. D'autre part, la présence des ouvertures 15 et des zones creuses 16 favorise la circulation de lubrifiant à l'intérieur du roulement. Les ouvertures 15 sont délimitées circonférentiellement sensiblement au niveau des ouvertures 16 et par conséquent entre l'emplanture de chaque branche 10 et radialement, de telle sorte à laisser subsister une partie de talon 7 du côté intérieur et une autre partie de talon 7 du côté extérieur.

Grâce à la réduction du diamètre extérieur de la partie axiale 8 et à la présence des ouvertures 15 et des zones creuses 16, la quantité de matière nécessaire à la formation de la cage 4 est nettement réduite, d'où une réduction du coût de matière première et une réduction de la masse qui permet de diminuer la déformation radiale lors de rotation à haute vitesse. Par ailleurs, la forme de la partie axiale 8 avec des branches formant des nervures de rigidification et la cloison 14 qui accroît également la rigidité du côté de la partie axiale 8 subissant des contraintes de traction axiales lors d'une déformation radiale en flexion de l'ensemble de la partie axiale 8, permet également de réduire ladite déformation radiale en flexion, le talon 7 restant relativement peu déformable radialement en raison de sa structure annulaire.

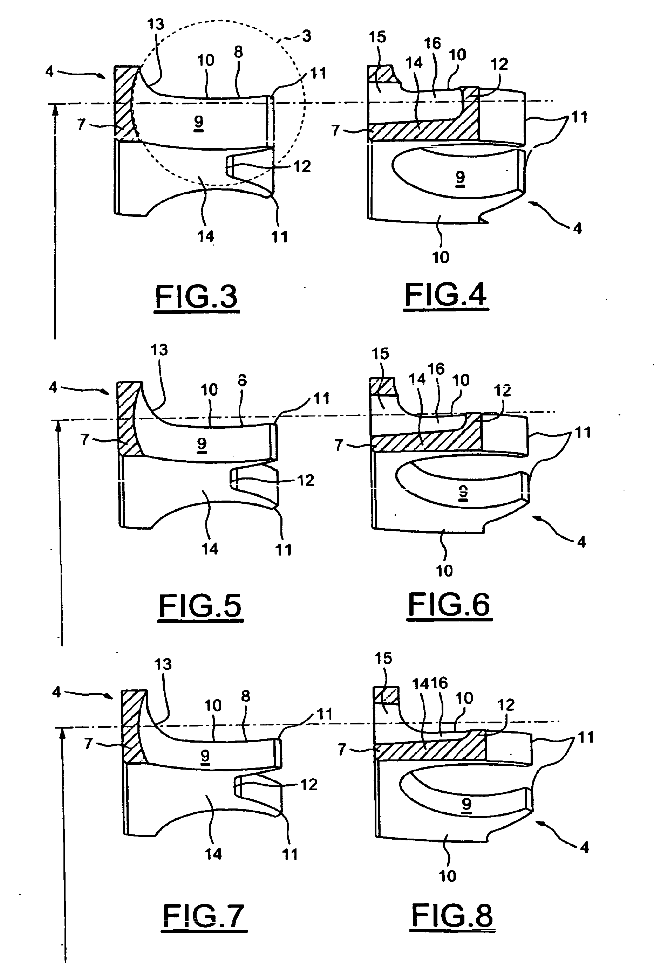

Comme on peut le voir sur les figures 3 et 4, le diamètre extérieur de la partie axiale 8 est légèrement supérieur au diamètre primitif de la cage et reste inférieur à la somme du diamètre primitif de la cage et de la moitié de l'épaisseur radiale du talon 7.

Dans le mode de réalisation illustré sur les figures 5 et 6, le diamètre extérieur de la partie axiale 8 est sensiblement égal au diamètre primitif de la cage 4.

Dans le mode de réalisation illustré sur les figures 7 et 8, le diamètre extérieur de la partie axiale 8 est inférieur au diamètre primitif tout en restant supérieur au diamètre primitif diminué de la moitié de l'épaisseur radiale du talon 7. Ce mode de réalisation offre une cage particulièrement légère et par conséquent économique. Sa déformation peut être légèrement supérieure, sans dommage particulier, en raison de la distance importante existant radialement entre les griffes 11 et l'alésage de la bague extérieure du roulement. Cette distance peut être supérieure au rayon des alvéoles.

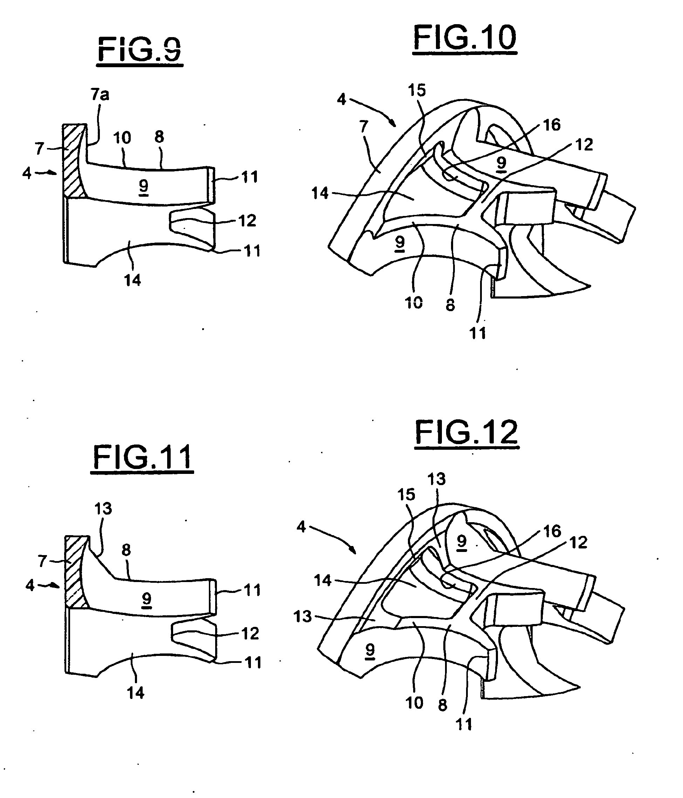

Dans le mode de réalisation illustré sur les figures 9 et 10, la partie axiale 8 et le talon 7 se raccordent directement, le talon 7 présentant une surface radiale 7a du côté de la partie axiale 8. Le raccordement 13 en arrondi du mode de réalisation précédent n'est donc pas présent.

Dans le mode de réalisation illustré sur les figures 11 et 12, le raccordement 13 se présente sous la forme d'un chanfrein sensiblement à 45° et présentant une longueur axiale relativement faible, de l'ordre de 15 à 25% de la longueur de la partie axiale 8. La présence d'un raccordement permet d'augmenter la rigidité radiale de la partie axiale 8, moyennant une très faible augmentation de masse.

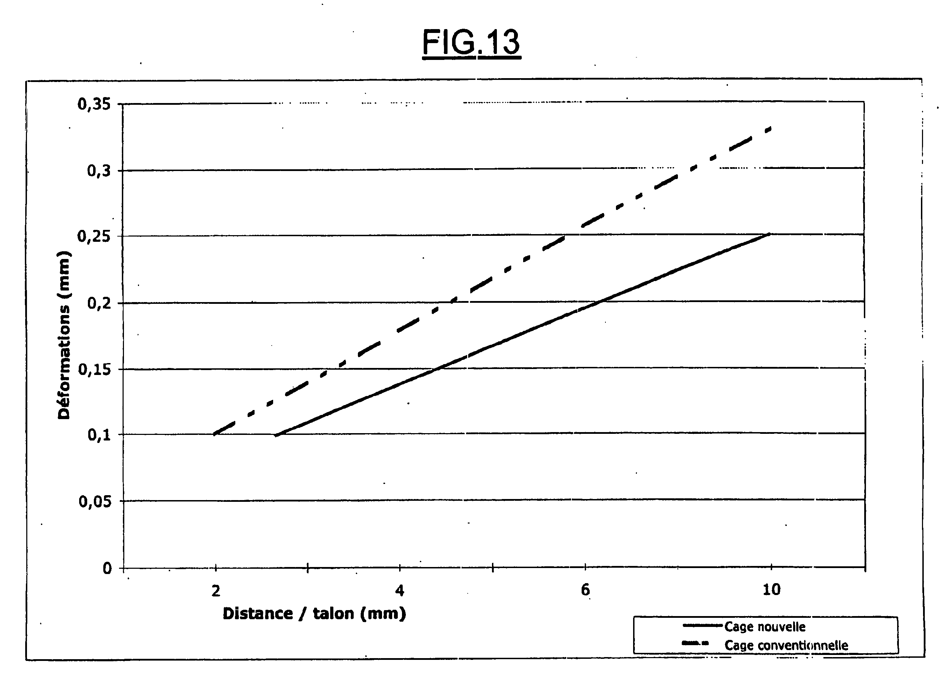

La courbe de la figure 13 montre, pour un point de fonctionnement donné d'un roulement donné, en d'autres termes à une vitesse particulière de rotation d'une cage de diamètre primitif particulier, l'évolution de la déformation radiale de la partie axiale 8 de la cage 4 en fonction de la distance par rapport au talon 7 du point dont la déformation est mesurée, et ce pour une cage conventionnelle et pour la cage selon l'invention. A titre d'exemple, l'on peut voir que lorsque la cage selon l'invention présente une déformation de 0,15 mm, la cage conventionnelle présente déjà une déformation de 0,2 mm, et ce à une égale distance du talon.

Outre une meilleure lubrification et une réduction de la masse, de l'inertie et de la quantité de matière utilisée, l'invention offre une réduction importante de la déformation radiale et par voie de conséquence, une amélioration de la régularité du film de lubrifiant, une réduction du couple de frottement, une réduction de l'échauffement interne du roulement, une réduction de l'usure de la cage et un accroissement considérable de ia durée de vie du roulement. Par ailleurs, on peut prévoir à déformation radiale maximale admissible, une augmentation de la vitesse de rotation du roulement tout à fait significative. L'accroissement de la vitesse peut être sensiblement égal à la racine carrée de la réduction de la déformation en passant d'une cage conventionnelle à une cage selon l'invention.

## Revendications

1. Cage (4) pour roulement à billes, comprenant un talon (7) annulaire et une portion sensiblement axiale (8) pourvue de griffes (11) définissant des alvéoles (9) pour des billes et se raccordant sur le talon (7), la portion sensiblement axiale (8) s'étendant axialement sur une longueur supérieure ou égale à la moitié du diamètre des alvéoles, la portion sensiblement axiale (8) présentant un diamètre extérieur inférieur au diamètre extérieur du talon (7), **caractérisé par le fait que** le diamètre extérieur de la portion sensiblement axiale est compris entre le diamètre primitif de la cage diminué de la moitié de l'épaisseur radiale du talon et le diamètre primitif de la cage augmenté de la moitié de l'épaisseur radiale du talon, des ouvertures (15) étant ménagées dans le talon (7), les ouvertures débouchant sur au moins deux faces du talon, la portion (8) sensiblement axiale de la cage présentant une cloison (14) disposée sur sa face interne en laissant subsister des zones creuses (16) sur la face externe de la portion sensiblement axiale (8), les ouvertures (15) et les zones creuses (16) étant en communication.

2. Cage selon la revendication 1, dans laquelle la portion sensiblement axiale (8) s'étend axialement sur une longueur au moins égale à 60% du diamètre des alvéoles (9).

3. Cage selon l'une quelconque des revendications précédentes, comprenant un raccordement (13) entre le talon (7) et la portion sensiblement axiale (8), ledit raccordement (13) s'étendant axialement sur une longueur inférieure à celle de la portion sensiblement axiale (8).

4. Cage selon l'une quelconque des revendications précédentes, dans laquelle les ouvertures (15) et les zones creuses (16) sont disposées angulairement à équidistance entre les alvéoles (9).

5. Cage selon l'une quelconque des revendications précédentes, dans laquelle la portion sensiblement axiale (8) comprend une pluralité de protubérances inter-alvéolaires, une protubérance comprenant deux branches (10) définissant les alvéoles (9) et se raccordant au talon (7), une nervure (12) reliant les branches (10) à distance du talon (7) et des extrémités libres des branches, et une cloison (14) d'épaisseur radiale inférieure à l'épaisseur radiale des branches, disposée entre les branches (10), l'entretoise (12) et le talon (7).

6. Cage selon l'une quelconque des revendications précédentes, comprenant du polyamide chargé de fibres de verre, et/ou du polyéther-éther-cétone.

7. Palier à roulement comprenant des billes (3) montées dans les alvéoles (9) d'une cage (4) selon l'une quelconque des revendications précédentes et disposées entre deux pistes de roulement.

## Claims

1. Cage (4) for a ball bearing, comprising an annular heel (7) and a substantially axial portion (8) provided with claws (11) defining pockets (9) for balls and connected to the heel (7), the substantially axial portion (8) extending axially over a length greater than or equal to half the diameter of the pockets, the substantially axial portion (8) having an outside diameter smaller than the outside diameter of the heel (7), **characterized in that** the outside diameter of the substantially axial portion is somewhere between the pitch circle diameter of the cage reduced by half the radial thickness of the heel and the pitch circle diameter of the cage increased by half the radial thickness of the heel, openings (15) being formed in the heel (7), the openings opening onto at least two faces of the heel, the substantially axial portion (8) of the cage having a partition (14) arranged on its internal face, leaving hollow regions (16) on the external face of the substantially axial portion (8), the openings (15) and the hollow regions (16) intercommunicating.

2. Cage according to Claim 1, in which the substantially axial portion (8) extends axially over a length at least equal to 60% of the diameter of the pockets (9).

3. Cage according to either one of the preceding claims, comprising a connection (13) between the heel (7) and the substantially axial portion (8), said connection (13) extending axially over a length shorter than that of the substantially axial portion (8).

4. Cage according to any one of the preceding claims, in which the openings (15) and the hollow regions (16) are angularly positioned at equal distances between the pockets (9).

5. Cage according to any one of the preceding claims, in which the substantially axial portion (8) comprises a plurality of inter-pocket protrusions, a protrusion comprising two branches (10) defining the pockets (9) and connected to the heel (7), a rib (12) connecting the branches (10) some distance from the heel (7) and from the free ends of the branches, and a partition (14) of a radial thickness less than the radial thickness of the branches, positioned between the branches (10), the spacer piece (12) and the heel (7).

6. Cage according to any one of the preceding claims, comprising glass-fiber filled polyamide and/or polyether-ether-ketone.

7. Rolling bearing assembly comprising balls (3) mounted in the pockets (9) of a cage (4) according to any one of the preceding claims and positioned between two raceways.

## Patentansprüche

1. Käfig (4) für Kugellager, der einen ringförmigen Steg (7) und einen im Wesentlichen axialen Abschnitt (8) aufweist, der mit Klauen (11) versehen ist, die Mulden (9) für Kugeln definieren und an den Steg (7) anschließen, wobei der im Wesentlichen axiale Abschnitt (8) sich axial über eine Länge erstreckt, die größer als die oder gleich der Hälfte des Durchmessers der Mulden ist, wobei der im Wesentlichen axiale Abschnitt (8) einen Außendurchmesser kleiner als der Außendurchmesser des Stegs (7) hat, **dadurch gekennzeichnet dass**, der Außendurchmesser des im Wesentlichen axialen Abschnitts zwischen dem Teilkreisdurchmesser des Käfigs, verringert um die Hälfte der radialen Dicke des Stegs, und dem Teilkreisdurchmesser des Käfigs, erhöht um die Hälfte der radialen Dicke des Stegs, liegt, wobei im Steg (7) Öffnungen (15) ausgebildet sind, die Öffnungen auf mindestens zwei Seiten des Stegs münden, wobei der im Wesentlichen axiale Abschnitt (8) des Käfigs eine Trennwand (14) aufweist, die auf seiner Innenseite angeordnet ist und vertiefte Zonen (16) auf der Außenseite des im Wesentlichen axialen Abschnitts (8) bestehen lässt, wobei die Öffnungen (15) und die vertieften Zonen (16) miteinander in Verbindung stehen.

2. Käfig nach Anspruch 1, bei dem der im Wesentlichen axiale Abschnitt (8) sich axial über eine Länge mindestens gleich 60 % des Durchmessers der Mulden (9) erstreckt.

3. Käfig nach einem der vorhergehenden Ansprüche, der eine Verbindung (13) zwischen dem Steg (7) und dem im Wesentlichen axialen Abschnitt (8) aufweist, wobei die Verbindung (13) sich axial über eine geringere Länge als diejenige des im Wesentlichen axialen Abschnitts (8) erstreckt.

4. Käfig nach einem der vorhergehenden Ansprüche, bei dem die Öffnungen (15) und die vertieften Zonen (16) winkelmäßig in gleichem Abstand zwischen den Mulden (9) angeordnet sind.

5. Käfig nach einem der vorhergehenden Ansprüche, bei dem der im Wesentlichen axiale Abschnitt (8) mehrere Vorsprünge zwischen den Mulden enthält, wobei ein Vorsprung zwei Schenkel (10), die die Mulden (9) definieren und an den Steg (7) anschließen, eine Rippe (12), die die Schenkel (10) in Abstand zum Steg (7) und zu den freien Enden der Schenkel verbindet, und eine Trennwand (14) mit einer radialen Dicke geringer als die radiale Dicke der Schenkel enthält, die zwischen den Schenkeln (10), dem Abstandsstück (12) und dem Steg (7) angeordnet ist.

6. Käfig nach einem der vorhergehenden Ansprüche, der glasfaserverstärktes Polyamid und/oder Polyether-Ether-Ceton enthält.

7. Wälzlager, das Kugeln (3) enthält, die in die Mulden (9) eines Käfigs (4) nach einem der vorhergehenden Ansprüche montiert und gemäß zwei Laufbahnen angeordnet sind.
